# EUROPÄISCHE PATENTSCHRIFT

(11) **EP 1 992 579 B1**
(45) Veröffentlichungstag und Bekanntmachung des Hinweises auf die Patenterteilung: **29.08.2012**
(21) Anmeldenummer: 08156096.3
(22) Anmeldetag: 13.05.2008
(51) Int. Cl.: B65G 29/00, B65G 47/08, B65G 47/244

(54) **Vorrichtung zum Verschieben von Gebinden gegenüber einer Transportbahn**
Device for aligning containers with a conveyor track
Dispositif de déplacement de fûts par rapport à une bande de transport

(30) Priorität: 14.05.2007 DE 102007022910
(43) Veröffentlichungstag der Anmeldung: 19.11.2008
(73) Patentinhaber: Krones AG, 93073 Neutraubling (DE)
(72) Erfinder: Fischer, Manfred, 85354 Freising (DE)
(74) Vertreter: Bittner, Bernhard

(56) Entgegenhaltungen:
- EP-A- 0 842 853
- EP-A- 1 767 474
- DE-A1- 2 810 834

## Beschreibung

Die vorliegende Erfindung bezieht sich auf eine Vorrichtung zum Verschieben von Objekten gegenüber einer Transportbahn. Die Erfindung wird unter Bezugnahme auf Gebinde, wie beispielsweise Flaschenkästen oder in Schrumpffolie eingeschlagene Flaschengruppen, beschrieben, die auf einer Transportbahn oder einem Transportband gefördert werden. In der Verpackungsindustrie ist es üblich, mehrere Lagen, beispielsweise von Getränkekisten, Sixpacks und dergleichen, übereinander zu stapeln. Dabei werden teilweise in den unterschiedlichen Lagen die Gebinde relativ zueinander gedreht oder verschoben, um auf diese Weise eine höhere Stabilität des gesamten Stapels zu erreichen. Um diese Drehungen bzw. Verschiebungen der einzelnen Gebinde zu erreichen, werden Vorrichtungen benötigt, die eine Drehung und Verschiebung der Gebinde gegenüber der Transportbahn bewirken.

Aus dem Stand der Technik sind unterschiedliche Vorrichtungen bekannt, um Behälter zu verschieben.

Die DE 38 44 016 A1 beschreibt eine Vorrichtung zum Drehen von rechteckigen Behältern. Dabei sind Verschiebeeinrichtungen vorgesehen, die sich entlang einer fest bestimmten Bahn bewegen. Gleichzeitig sind diese Verschiebeeinrichtungen schwenkbar und können auf diese Weise Pakete greifen und diese um festgelegte Winkel drehen. Dabei ist jedoch die Drehung direkt an die Bewegung des Verschiebeelements gekoppelt. Auch werden die Pakete durch die Verschiebeeinrichtung nur entlang einer festgelegten Transportbahn bewegt und daher ist diese Vorrichtung für die beschriebene Anwendung, das heißt für den Zweck, unterschiedliche Lagen mit verschiedenen geometrischen Anordnungen der Gebinde in den einzelnen Gebindelagen zu erreichen, nicht geeignet. Daneben werden im Falle der DE 38 44 016 A1 die einzelnen Pakete in Abhängigkeit von ihrer ursprünglichen Lage in zwei unterschiedliche Transportbahnen überführt, was für die gegenständliche Anwendung ebenfalls nicht akzeptabel ist.

Aus der DE 102 19 129 A1 sind ein Verfahren und eine Vorrichtung zum Drehen und Verteilen oder Zusammenführen von Packs bekannt. Dabei werden die betreffenden Packs in mindestens einer Zuteilbahn zugeführt und in wenigstens einer parallelen Auslaufbahn abgeführt und teilweise um 90° verdreht. Um diese Drehung zu bewirken, ist eine Greifeinrichtung vorgesehen, welche die Packs an zwei gegenüberliegenden Endseiten umklammert und anschließend dreht. Diese Vorrichtung ist jedoch in der Handhabung relativ unflexibel, da die Greifeinrichtungen jeweils nach dem Verdrehen der Packs abgezogen werden müssen. Zu diesem Zweck ist ein Antriebsmotor vorgesehen, der den entsprechenden Greifkopf anhebt.

Aus der DE 102 61 551 A1 ist eine Drehvorrichtung zum Drehen von Gegenständen auf einem Förderer bekannt. Dabei ist diese Drehvorrichtung um eine Schwenkachse schwenkbar angeordnet, diese Schwenkachse ist jedoch selbst stationär. Damit sind mit dieser Vorrichtung nur genau definierte Drehungen der Gegenstände möglich, nicht jedoch von dieser Drehung unabhängige Verschiebungen derselben auf der Transportbahn zusätzlich zu der Drehung.

Die WO 2006/089702 A1 beschreibt ebenfalls eine Drehvorrichtung. Dabei ist ein verdrehbarer Drehkopf vorgesehen, der von oben auf den sich auf einer Unterstützungsfläche befindenden Gegenstand absenkbar ist, wobei der Gegenstand beim Verdrehen des Drehkopfes mitnehmbar ist. Dabei ist hier der Drehkopf ebenfalls stationär angeordnet und nur in einer senkrecht zu der Unterstützungsfläche liegenden Richtung bewegbar.

Aus der CH 653 644 A5 ist eine Vorrichtung zur Aufteilung einreihig ankommender Stückgüter in zwei parallele Richtungen bekannt. Bei dieser Vorrichtung ist jedoch keine Drehung der Stückgüter möglich.

DE 28 10 834 A1 zeigt eine Vorrichtung zum Verschieben von Objekten (Büchern) gemäß dem Oberbegriff von Anspruch 1.

Der vorliegenden Erfindung liegt daher die Aufgabe zugrunde, eine Vorrichtung zum Verschieben von Objekten zu schaffen, die einerseits eine Drehung dieser Objekte gegenüber einer Transportbahn erlaubt und andererseits, falls gewünscht, auch eine Verschiebung dieser Objekte, damit auf diese Weise die einzelnen Objekte, bei denen es sich hier um Getränkekisten handelt, in mehreren Lagen in unterschiedlichen Ausrichtungen übereinander gestapelt werden können. Dies wird erfindungsgemäß durch eine Vorrichtung nach Anspruch 1, eine Anlage nach Anspruch 12 und ein Verfahren nach Anspruch 14 erreicht. Vorteilhafte Ausführungsformen und Weiterbildungen sind Gegenstand der Unteransprüche.

Die erfindungsgemäße Vorrichtung zum Verschieben von Objekten gegenüber einer Transportbahn, entlang derer die Objekte bewegt werden, weist eine Vielzahl von Verschiebeeinrichtungen auf, welche die Objekte wenigstens teilweise gegenüber dieser Transportbahn verschieben. Dabei weisen die Verschiebeeinrichtungen wenigstens teilweise ein Verschiebeelement auf, das in wenigstens einem Bereich mit den Objekten in Kontakt bringbar ist bzw. steht, um diese gegenüber der Transportbahn zu verschieben. Erfindungsgemäß sind die Verschiebeelemente um vorgegebene Schwenkachsen schwenkbar. Weiterhin sind den Verschiebeelementen jeweils zugeordnete Bewegungseinrichtungen vorgesehen, die bewirken, dass unterschiedliche Objekte in ihrer Gesamtheit gegenüber der Transportbahn auf zueinander unterschiedlichen Transportpfaden verschoben werden können.

Unter der Transportbahn wird eine Fläche verstanden, die üblicherweise durch ein Transportband vorgegeben wird. Dabei kann diese Transportbahn eben sein, es wäre jedoch auch möglich, dass es sich um gekrümmte Transportbahnen handelt. Bevorzugt weist die Transportbahn eine ebene, gekrümmte Ebene auf.

Bei den Objekten handelt es sich insbesondere um Gebinde bzw. Getränkekisten. Unter dem Transportpfad wird der Weg verstanden, entlang dem die Objekte geführt werden. Es ist möglich, dass dieser Transportpfad abschnittsweise gekrümmt ist.

Unter einem Verschieben gegenüber der Transportbahn wird grundsätzlich jede Bewegung gegenüber der Transportbahn verstanden, also auch eine Drehung der Objekte, die gegebenenfalls gleichzeitig eine Verschiebung derselben zur Folge hat.

Bei dem Verschiebeelement handelt es sich vorzugsweise um eine Platte oder eine Fläche, die an dem zu verschiebenden Objekt anliegt. Es wäre jedoch auch möglich, dass als Verschiebeelement ein Bügel, eine Stange oder dergleichen vorgesehen ist, der bzw. die ein Verschieben der Objekte ermöglicht.

Erfindungsgemäß wird die Verschiebeeinrichtung nicht nur um eine Schwenkachse geschwenkt sondern auch in ihrer Gesamtheit gegenüber der Transportbahn bewegt. Auf diese Weise können die Gebinde im Prinzip in jede beliebige Drehstellung und auch auf jede beliebigen Position innerhalb der Transportbahn verschoben werden. Üblicherweise erfolgt jedoch eine Drehung um 90°. Unter einer Verschiebung der Gebinde in ihrer Gesamtheit wird verstanden, dass insbesondere auch die Schwenkachse der Verschiebeelemente gegenüber der Transportbahn verschoben werden kann.

Unter wenigstens teilweise unterschiedlichen Transportpfaden wird verstanden, dass unterschiedliche Objekte nicht nur um ihre Schwenkachse geschwenkt werden, sondern auch auf wenigstens teilweise unterschiedlichen Pfaden geführt werden und damit insbesondere am Ende der Transportbahn in unterschiedliche Endpositionen gelangen. Bevorzugt ist eine Vielzahl von unterschiedlichen Endpositionen erreichbar. So können beispielsweise die Objekte in drei unterschiedlichen und parallel zueinander verlaufenden Reihen auf der Transportbahn oder einem dieser Transportbahn stromabwärts nachgeordneten Transportband angeordnet und dort geführt werden. Damit erlaubt die erfindungsgemäße Vorrichtung eine Zusammenstellung der einzelnen Gebinde, die in unterschiedlichen übereinander zu stapelnden Lagen variiert werden kann. Insbesondere ist auch eine bestimmte Drehstellung der Objekte möglich unabhängig von der Verschiebung des Objekts in seiner Gesamtheit.

Im Gegensatz hierzu werden im Stand der Technik teilweise pneumatisch angesteuerte Anlaufbügel eingesetzt. Diese Lösung ist zwar kostengünstig, das Drehergebnis jedoch nicht exakt.

Vorzugsweise ist das Verschiebeelement ein Winkelelement. Damit werden die aus dem Stand der Technik bekannten Bügel oder Greifer, welche das Gebinde von zwei gegenüberliegenden Seiten greifen und damit eine Kraft zur Drehung aufbringen, vereinfacht. Ein Winkelelement kann, wenn es in geeigneter Weise gegenüber der Transportbahn bewegt wird, eine genau definierte Drehstellung des Gebindes gegenüber dem Winkelelement erreichen.

Vorzugsweise ist das Verschiebeelement in zwei zueinander senkrecht stehenden Richtungen offen. Damit handelt es sich um einen Winkel mit zwei Schenkeln und zwei diesen Schenkeln gegenüberliegenden offenen Seiten. Auf diese Weise ist nicht, wie im Stand der Technik, ein Abziehen des Winkelelements erforderlich, sondern es ist möglich, durch einfaches Abbremsen des Winkelelements ein Loslösen des Winkelelements von dem zu verschiebenden Objekt zu erreichen. Auch sind vorzugsweise keine Einhakelemente vorgesehen, die in den betreffenden Getränkekästen einhaken, um diese zu stabilisieren. Derartige Einhakelemente bringen den Nachteil mit sich, dass oft sehr spezielle Bewegungen nötig sind, um die Einhakelemente wieder von den Gebinden oder Getränkekisten abzulösen.

Damit wird die für eine Drehung oder Verschiebung des Objekts notwendige Kraft dadurch erzeugt, dass die Verschiebeeinrichtung sich dem beispielsweise durch ein Band transportierten Gebinde in den Weg stellt. Das Verschiebeelement legt sich also formschlüssig an und der Kraftschluß wird über Reibungskräfte des durchrutschenden Objekts erzeugt. Durch die Relativgeschwindigkeit und die Reibung wird ein Kraftvektor aufgespannt. Die Anstellung des Bleches bzw. Winkelelementes erfolgt bevorzugt in der Art, dass der Kraftvektor in die Fläche des Bleches bzw. in eine Richtung zeigt, die zwischen den Normalen auf die beiden Schenkel des Winkelelementes liegt, zeigt. Dies ist vor allem bei einem Winkelblech gegeben, da damit auch Schwankungen des Kraftvektorwinkels abgefangen werden können, so lange der Vektor rechtwinklig oder kleiner auf die seitlichen Führungsflächen trifft. Dies wird unter Bezugnahme auf die Figuren genauer erläutert. Durch eine gezielte Bewegung der Verschiebeeinrichtung bzw. der Verschiebeelemente ist es daher möglich, eine exakte Drehung oder Verschiebung, auch in Kombination, zu erreichen.

Vorzugsweise sind die Schwenkbewegung des Verschiebeelements um die vorgegebene Schwenkachse und die Bewegung des Verschiebeelements in der vorgegebenen Verschieberichtung unabhängig voneinander durchführbar. Damit sind die unterschiedlichsten Bewegungen des Objekts gegenüber der Transportbahn möglich, beispielsweise eine bloße Verschiebung des Objekts, eine Verschiebung und eine Verdrehung des Objekts sowie eine reine Verdrehung des Objekts. Auf diese Weise können beispielsweise computergesteuert unterschiedliche übereinander zu stapelnde Lagen beliebig zusammengestellt werden. Bevorzugt sind die einzelnen Verschiebeeinrichtungen unabhängig voneinander steuerbar. Vorteilhaft weist das Winkelelement einen ersten Schenkel und einen zweiten Schenkel auf, die sich entlang einer vorgegebenen Linie schneiden und die Schwenkachse ist dabei von dieser vorgegebenen Linie beabstandet und liegt zwischen den beiden Schenkeln. Durch diese Anordnung der Schwenkachse wird erreicht, dass bei einer Drehung des Winkelelements das Objekt nicht durch die Fliehkräfte aus dem Winkelelement herausdrängt wird. Vorzugsweise ist die Schwenkachse so angeordnet, dass der Schwerpunkt der zu verschiebenden Objekte zwischen der vorgegebenen Linie und der Schwenkachse liegt. Weiterhin liegt besonders bevorzugt die Schwenkachse im Bereich der Winkelhalbierenden, die sich zwischen den beiden Schenkeln ergibt. Auf diese Weise wird im Fall einer Schwenkung des Winkelelements das Objekt mehr oder weniger in Richtung beider Schenkel gedrängt, was insbesondere auch im Hinblick auf die hohen Arbeitsgeschwindigkeiten derartiger Vorrichtungen vorteilhaft ist. Bei einer weiteren vorteilhaften Ausführungsform stehen die beiden Schenkel im Wesentlichen senkrecht zueinander, wobei besonders bevorzugt ein Bereich jedes Schenkels wenigstens zeitweise an dem zu verschiebenden Objekt anliegt. Diese Anordnung ist besonders für Objekte mit rechteckigem Querschnitt geeignet.

Vorzugsweise sind die Schwenkachse und die vorgegebene Linie, entlang derer sich die Schenkel schneiden, im Wesentlichen parallel zueinander. Weiterhin steht besonders bevorzugt die Schwenkachse im Wesentlichen senkrecht zu der Transportbahn bzw. senkrecht zu der Ebene, die durch die unterschiedlichen Transportpfade aufgespannt wird.

Bei einer weiteren vorteilhaften Gestaltung sind die Bewegungseinrichtungen jeweils als Ausleger bzw. Auslegearme ausgeführt. Dabei sind die Verschiebeelemente vorteilhaft in den Längsrichtungen der jeweiligen Ausleger bewegbar. Bei einer weiteren vorteilhaften Ausführungsform sind die Bewegungseinrichtungen um eine zentrale Drehachse bewegbar. Bei dieser Ausführungsform ist es insbesondere möglich, dass eine Vielzahl von Auslegern drehbar um die Drehachse angeordnet ist und an den Enden dieser Ausleger wiederum die Verschiebeelemente vorgesehen sind. Es wäre jedoch auch möglich, dass eine Vielzahl von Auslegern an einer Kette oder dergleichen angeordnet ist, wobei diese Kette wiederum auf einer elliptischen bzw. bogenförmigen Bahn geführt wird.

Die vorliegende Erfindung ist weiterhin auf eine Anlage zum Befördern von Objekten gerichtet. Diese Anlage weist ein Transportband auf, welches auf dem Transportband angeordnete Objekte befördert. Weiterhin ist eine Vielzahl von Verschiebeeinrichtungen vorgesehen, welche die Objekte wenigstens teilweise gegenüber einer Transportbahn verschieben, wobei die Verschiebeeinrichtungen jeweils wenigstens ein Verschiebeelement aufweisen, das in wenigstens einem Bereich mit den Objekten in Kontakt bringbar ist, um diese gegenüber der Transportbahn zu verschieben. Erfindungsgemäß sind die Verschiebeelemente um eine vorgegebene Schwenkachse schwenkbar und es sind den Verschiebeelementen jeweils zugeordnete Bewegungseinrichtungen vorgesehen, die bewirken, dass unterschiedliche Verschiebeelemente in ihrer Gesamtheit gegenüber der Transportbahn auf zueinander unterschiedlichen Transportpfaden verschoben werden können.

Vorzugsweise bewegen sich die Verschiebeelemente in der Transportrichtung wenigstens zeitweise schneller als das Transportband. Auf diese Weise wird erreicht, dass das zu verschiebende Objekt zumindest während dieses Bewegungsabschnittes an die Verschiebeeinrichtung bzw. in das Winkelelement gedrückt wird und auf diese Weise eine eindeutig definierte Verschiebebewegung möglich ist. Die Vorrichtung zum Verschieben selbst ist in vorteilhafter Weise in der oben beschriebenen Art ausgeführt.

Die vorliegende Erfindung ist weiterhin auf ein Verfahren zum Verschieben von Objekten gegenüber einer Transportbahn, entlang derer die Objekte bewegt werden, wobei die Objekte mit einer Vielzahl von Verschiebeeinrichtungen gegenüber dieser Transportbahn verschoben werden, gerichtet. Erfindungsgemäß wird wenigstens ein Teil der Objekte um eine vorgegebene zu der Transportbahn im Wesentlichen senkrecht stehende Schwenkachse geschwenkt und unterschiedliche Objekte werden neben dieser Schwenkbewegung in ihrer Gesamtheit gegenüber der Transportbahn auf zueinander unterschiedlichen Transportpfaden gegenüber der Transportbahn verschoben.

Bevorzugt wird ein vorbestimmter Teil der Objekte um die vorgegebene Schwenkachse geschwenkt. Durch dieses erfindungsgemäße Verfahren ist ebenfalls ein genaues Verschieben der Objekte gegenüber der Transportbahn möglich. Vorzugsweise werden, insbesondere durch eine Steuerungseinrichtung, eine Vielzahl von Objekten in genau definierte Positionen verschoben und mit weiteren ebenfalls zumindest teilweise verschobenen Objekten übereinander gestapelt.

Weitere Vorteile und Ausführungsformen ergeben sich aus den beigefügten Zeichnungen. Darin zeigen:
- Fig. 1: eine erste Ansicht einer erfindungsgemäßen Vorrichtung zum Verschieben von Objekten;
- Fig. 2: eine weitere Ansicht einer erfindungsgemäßen Vorrichtung zum Befördern von Objekten;
- Fig. 3: eine weitere Ansicht einer erfindungsgemäßen Vorrichtung zum Verschieben von Objekten;
- Fig. 4: eine weitere Ansicht einer erfindungsgemäßen Vorrichtung von Verschieben von Objekten; und
- Fig. 5: eine schematische Darstellung des Verfahrens zum Verschieben von Objekten.

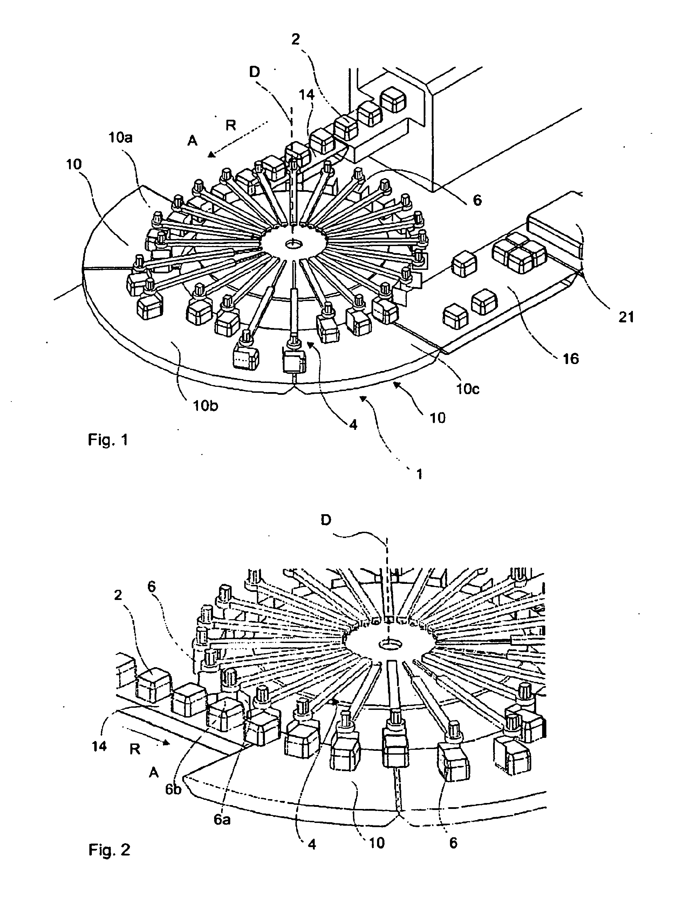

Fig. 1 zeigt eine Anlage mit einer Vorrichtung zum Verschieben von Objekten 2. Diese Anlage weist ein Transportband 14 auf, welches eine Vielzahl von Objekten 2 entlang einer Transportrichtung R befördert. Das Bezugszeichen 1 bezieht sich, wie gezeigt, auf die erfindungsgemäße Vorrichtung zum Verschieben der Objekte 2 gegenüber einer Transportbahn 10. Die Transportbahn 10 ist hier zumindest abschnittsweise als ringsegmentförmige Fläche ausgebildet, entlang derer die einzelnen Objekte bzw. die Gebinde 2 bewegt werden können. Die Vorrichtung 1 weist eine Drehachse D auf, der gegenüber eine Vielzahl von in ihrer Gesamtheit mit 4 bezeichneten Verschiebeeinrichtungen drehbar angeordnet sind. Anstelle der hier gezeigten Ausführungsform könnte jedoch eine um zwei Umlenkrollen angeordnete Kette vorgesehen sein, um welche die einzelnen Verschiebeeinrichtungen 4 umlaufen.

Damit ist hier die Vorrichtung 1 als kreisförmiger Dreh- und Verteilstern ausgeführt. Die Objekte bzw. Gebinde werden hier um 180° umgelenkt, wobei die Gebindebahn als angetriebene 180°-Gebindebahn ausgeführt ist. Im weiteren Verlauf (nicht gezeigt) werden unterschiedliche Gebindestapel übereinander angeordnet, wobei eine Doppelsäule mit zwei Jalousieköpfen verwendet werden kann.

Die Verschiebeeinrichtungen 4 weisen jeweils Verschiebeelemente 6 auf, die hier als Winkelelemente ausgeführt sind. Während des Betriebs in der Anlage legen sich die einzelnen Winkelelemente an die jeweiligen Objekte 2 an und übernehmen damit deren Führung. Zu diesem Zweck bewegen sich zumindest in dem Abschnitt A die einzelnen Winkelelemente schneller in der Richtung R als das Transportband 14.

Die Transportbahn 10 ist hier in 3 Segmente 10a, 10b und 10c unterteilt. Damit ist es auch möglich, innerhalb dieser einzelnen Segmente 10a, 10b und 10c Objekte mit unterschiedlicher Geschwindigkeit zu führen. Auch wäre es möglich, beispielsweise die Segmente 10a und 10c angetrieben auszuführen und das mittlere Segment 10b nicht angetrieben, beispielsweise in Form einer ebenen Platte oder in Form einer Vielzahl von Rollen auszuführen.

Fig. 2 zeigt eine Detaildarstellung im Bereich der Übernahme der einzelnen Objekte 2. Die Objekte 2 werden über das Transportband 14 beispielsweise aus einem Schrumpftunnel einer Verpackungsmaschine angeliefert und von den einzelnen Winkelelementen 6 aufgenommen. Bei der Übernahme ist dabei bevorzugt ein Schenkel 6a der Winkelelemente senkrecht zu der radialen Richtung bezüglich des Drehpunktes D und der zweite Schenkel 6b verläuft in der radialen Richtung. Weiterhin ist der erste Schenkel 6a zum Zeitpunkt der Übernahme der zwischen dem Objekt 2 und dem Drehpunkt für jede Anlage angeordnet und der zweite Schenkel 6b verschiebt das Objekt von hinten. Durch diese Anordnung kann das Winkelelement besonders einfach in die Zwischenräume zwischen zwei Objekten 2, die von dem Transportband 14 herangeführt werden, eingreifen.

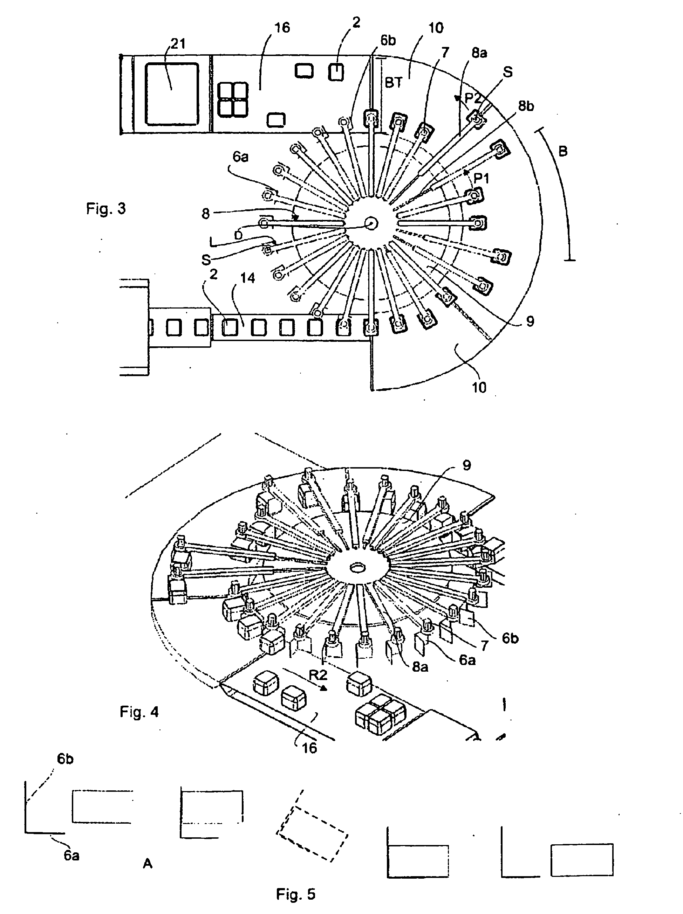

Fig. 3 zeigt eine weitere Ansicht von oben auf die erfindungsgemäße Vorrichtung. Im weiteren Umlauf können die jeweiligen Objekte 2 gedreht werden und gleichzeitig gegenüber der Transportbahn 10 hier in radialer Richtung über dem Drehpunkt D nach außen bewegt werden. Da gleichzeitig auch eine Drehbewegung der Verschiebeelemente 6 vorliegt, wird sich keine reine Bewegung radial nach außen ergeben, sondern eine nach außen verlaufende spiralförmige Bahn. Die Bezugszeichen P1 und P2 in Fig. 3 beziehen sich auf unterschiedliche Transportpfade, entlang derer die Objekte 2 befördert werden. Diese Beförderung ist auf unterschiedlichen Transportpfaden durch die unabhängige Drehbewegungs- wie die Verschiebebewegung der Bewegungseinrichtungen 8 möglich. Damit laufen die Objekte 2 jeweils in dem gleichem Bereich in die Transportbahn 10 ein, verlassen diese jedoch an unterschiedlichen Positionen entlang der Breite BT des Transportbands, wo sie in unterschiedlichen Drehstellungen abgegeben werden können.

Wie in Fig. 3 gezeigt, werden die einzelnen Gebinde beispielsweise innerhalb des gezeigten Abschnittes B um 90° gedreht. Dabei ist es jedoch auch möglich, die Drehung in einem kürzeren oder längeren Abschnitt durchzuführen. Damit kann sich in geeigneter Bewegung der einzelnen Verschiebeelemente 6 das Gebinde jeweils formschlüssig an das Winkelelement 6 anlegen. Wie erwähnt, wird durch die Relativgeschwindigkeit der Objekte 2 und die Reibung gegenüber der Transportbahn ein Kraftvektor aufgespannt. Das Winkelelement 6 ist dabei jeweils so angeordnet, dass dieser Kraftvektor in den Winkel 6 hineinzeigt und auf diese Weise wird erreicht, dass die Objekte 2 jeweils in die Winkelelemente 6 hineingedrückt werden.

Man erkennt, dass die Schwenkachse S parallel zu der Verbindungslinie 2 zwischen den jeweiligen Schenkeln 6a und 6b verläuft und im Inneren der Fläche, die durch die beiden Schenkel 6a und 6b aufgespannt wird, liegt. Das Bezugszeichen 8b bezieht sich auf Schienen, die an dem Drehteller 9 angeordnet sind und die zur Führung der Auslegearme 8a dienen. Die Verschiebung kann dabei über programmgesteuerte elektromotorische Antriebe, z.B. Zahnradantriebe oder dergleichen erfolgen.

Fig. 4 zeigt eine weitere Ansicht der erfindungsgemäßen Vorrichtung.

Nachdem die halbkreisförmige Transportbahn 3 durchlaufen wurde, werden die Gebinde an ein weiteres Transportband 16 gegeben. Dabei können, wie in Figur 1 gezeigt, die einzelnen Objekte 2 in unterschiedlichen Reihen gegenüber der Transportbahn angeordnet werden und auch ihre Drehstellung kann verändert hier, jeweils um 90 ° gedreht, werden. Auf diese Weise können die einzelnen Objekte in ein Behältnis 21 einlaufen und werden dabei bevorzugt so angeordnet, dass die Fläche dieses Behältnisses 21 weitgehend aufgefüllt wird.

Durch eine (nicht gezeigte) Steuerungseinrichtung können jeweils die Drehstellungen und die Verschiebungen der einzelnen Behältnisse vorausberechnet werden, um eine möglichst geeignete Zusammenstellung zu erreichen. Nach Zufuhr von Böden können die einzelnen entstandenen Packungen stapelweise übereinander angeordnet werden, was mit Hilfe einer (nicht gezeigten) Stapeleinrichtung erfolgt. Das Transportband 16 bewegt sich bevorzugt in der Richtung R1 schneller als die einzelnen Verschiebeelemente, damit die Objekte von dieser abgezogen werden können.

Wie ausgeführt, sind die einzelnen Winkelelemente 6 jeweils um vorgegebene Schwenkachsen S schwenkbar. Um die Drehung zu erreichen, weist jede Verschiebeeinrichtung 4 jeweils einen Motor 7 auf. Diese einzelnen Motoren 7 sind unabhängig voneinander steuerbar.

Weiterhin weisen die einzelnen Verschiebeeinrichtungen Bewegungseinrichtungen 8 auf, die hier einen Auslegearm 8a beinhalten, der gegenüber einer Schiene 8b verschiebbar ist und damit die Bewegung in radialer Richtung bezüglich des Drehpunktes D erlaubt.

Durch die Kombination der Schwenkbewegung und der radialen Bewegung gegenüber dem Drehpunkt können, wie erwähnt, die Objekte im Wesentlichen beliebige Einstellungen gegenüber dem Transportband 16 einnehmen. Dabei werden jedoch die Objekte üblicherweise entweder nicht geschwenkt oder um genau 90° geschwenkt. Andere Schwenkbewegungen sind jedoch insbesondere bei Objekten mit nicht rechteckigem Querschnitt denkbar.

Fig. 5 veranschaulicht die Übernahme und Abgabe eines Objekts 2 durch ein Winkelelement, wobei hier das Objekt 2 lediglich verschoben, nicht aber gedreht wird. Zunächst wird das Winkelelement 6 mit seinen beiden Schenkeln 6a und 6b an das Objekt 2 herangeführt, so dass der Schenkel 6b an einer Querseite des Objekts anliegt. Im Weiteren wird das

Winkelelement um seine Schwenkachse gedreht und somit erreicht, dass das Objekt in eine exakte Lage bezüglich des Winkelelements kommt, das heißt in die Lage, in der es mit einer Längs- und einer Querseite an beiden Schenkeln 6a und 6b des Winkelelements anliegt. In dieser Position wird das Winkelelement mit dem Objekt verschoben und im weiteren Bild wieder zurückgedreht, so dass insgesamt im Ergebnis das Objekt nicht gedreht sondern nur verschoben wurde. Im letzten Schritt wird das Objekt mit einer gegenüber dem Winkelelement höheren Geschwindigkeit von diesem abgeführt und ist damit in einer genau definierten Lage angeordnet. Damit ist es durch eine gezielte Bewegung des Verschiebelements 6 möglich, eine exakte Drehung oder Verschiebung der einzelnen Objekte zu erreichen.

Dabei ist, wie oben gesagt, die Form der Umlaufbahn bzw. der Transportbahn nicht auf eine Kreisbahn beschränkt, sondern es wäre auch ein Transport entlang einer geraden Linie, einer gekrümmten Linie oder dergleichen denkbar. Wie oben ausgeführt, könnte die gesamte Vorrichtung auch entlang eines langgestreckten O's oder Ovals aufgebaut sein. In jedem Fall können mit hoher Geschwindigkeit kontinuierlich zulaufende Gebinde ohne Verzögerung auf engem Raum verteilt und ggf. gedreht werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung zum Verschieben von Objekten
- 2: Gebinde bzw. Objekte
- 4: Verschiebeeinrichtungen
- 6: Verschiebeelemente bzw. Winkelelemente
- 6a, 6b: Schenkel der Verschiebeelemente
- 7: Motoren
- 8: Bewegungseinrichtungen
- 8a: Auslegearm
- 8b: Schiene
- 9: Drehteller
- 10: Transportbahn
- 10a, 10b, 10c: Segmente der Transportbahn
- 14: Transportband
- 16: weiteres Transportband
- 21: Behältnis
- A: Abschnitt
- B: Abschnitt
- BT: Breite der Transportbahn 10
- D: Drehachse
- R: Transportrichtung
- R1: Transportrichtung
- S: Schwenkachse

## Patentansprüche

1. Vorrichtung (1) zum Verschieben von Objekten (2) gegenüber einer Transportbahn (10), entlang derer die Objekte (2) bewegt werden, mit einer Vielzahl von Verschiebeeinrichtungen (4), welche die Objekte (2) wenigstens teilweise gegenüber dieser Transportbahn (10) verschieben, wobei die Verschiebeeinrichtungen (4) wenigstens ein Verschiebeelement (6) aufweisen, das in wenigstens einem Bereich mit den Objekten (2) in Kontakt bringbar ist um diese gegenüber der Transportbahn (10) zu verschieben, wobei die Verschiebeelemente (6) um vorgegebene Schwenkachsen (S) schwenkbar sind und den Verschiebeelementen (6) jeweils zugeordnete Bewegungseinrichtungen (8) vorgesehen sind, die bewirken, dass unterschiedliche Objekte (2) in ihrer Gesamtheit gegenüber der Transportbahn (10) auf zueinander unterschiedlichen Transportpfaden gegenüber der Transportbahn (10) verschoben werden können,
**dadurch gekennzeichnet, dass**
das Verschiebeelement (6) in zwei zueinander senkrecht stehenden Richtungen offen ist und die Schwenkbewegung des Verschiebeelements (6) um die vorgegebene Schwenkachse (S) und die Bewegung des Verschiebeelements (6) in seiner Gesamtheit unabhängig voneinander durchführbar sind.

2. Vorrichtung nach Anspruch 1, **dadurch gekennzeichnet dass** das Verschiebelement (6) ein Wickelelement (6) ist.

3. Vorrichtung nach wenigstens einem der vorangegangenen Ansprüche, **dadurch gekennzeichnet dass** das Winkelelement einen ersten Schenkel (6a) und einen zweiten Schenkel (6b) aufweist, die sich entlang einer vorgegebenen Linie (L) schneiden und die Schwenkachse (S) von der vorgegebenen Linie (L) beabstandet ist und zwischen den beiden Schenkeln (6a, 6b) angeordnet ist.

4. Vorrichtung nach Anspruch 3, **dadurch gekennzeichnet, dass** die Schenkel (6a) und (6b) im Wesentlichen senkrecht zueinander stehen.

5. Vorrichtung nach wenigstens einem der vorangegangenen Ansprüche 3 - 4 dadurcn gekennzeichnet, dass die Schwenkachse (S) und die vorgegebene Linie (L) im Wesentlichen parallel zueinander sind.

6. Vorrichtung nach wenigstens einem der vorangegangenen Ansprüche, **dadurch gekennzeichnet, dass** die Bewegungseinrichtungen Ausleger (8) sind.

7. Vorrichtung nach Anspruch 6, **dadurch gekennzeichnet, dass** die Verschiebeelemente (6) in den Längsrichtungen der Ausleger (8) bewegbar sind.

8. Vorrichtung nach wenigstens einem der vorangegangenen Ansprüche, **dadurch gekennzeichnet, dass** die Bewegungseinrichtungen (8) um eine zentrale Drehachse (D) drehbar sind.

9. Anlage (12) zum Befördern Objekten mit einem Transportband (14), welches auf dem Transportband (14) angeordnete Objekte (2) befördert, mit einer Vielzahl von Verschiebeeinrichtungen (4), welche die Objekte (2) wenigstens teilweise gegenüber einer Transportbahn (10) verschieben, wobei die Verschiebeeinrichtungen (4) wenigstens ein Verschiebeelement (6) aufweisen, das in wenigstens einem Bereich mit den Objekten (2) in Kontakt bringbar ist, um diese gegenüber der Transportbahn (10) zu verschieben, wobei die Verschiebeelemente (6) um eine vorgegebene Schwenkachse (S) schwenkbar sind und den Verschiebeelementen (6) jeweils zugeordnete Bewegungseinrichtungen (8) vorgesehen sind, die bewirken, dass unterschiedliche Verschiebelemente (6) in ihrer Gesamtheit gegenüber der Transportbahn (10) auf zweinander unterschiedlichen Transportpfaden verschoben werden können, **dadurch gekennzeichnet, dass** das Verschiebeelement (6) in zwei zueinander senkrecht stehenden Richtungen offen ist und die Schwenkbewegung des Verschiebeelements (6) um die vorgegebene Schwenkachse (S) und die Bewegung des Verschiebeelements (6) In seiner Gesamtheit unabhängig voneinander durchführbar sind.

10. Anlage nach Anspruch 9, **dadurch gekennzeichnet, dass** sich die Verschiebeelemente (6) In der Transportrichtung (R) wenigstens zeitweise schneller bewegen als das Transportband (14)

11. Verfahren zum Verschieben von Objekten (2) gegenüber einer Transportbahn (10) entlang derer die Objekte (2) bewegt werden, wobei die Objekte mit einer Vielzahl von Verschiebeeinrichtungen (6), gegenüber dieser Transportbahn (10) verschoben werden, wobei wenigstens ein Teil der Objekte (2) um eine vorgegebene zu der Transportbahn (10) im Wesentlichen senkrecht stehende Schwenkachse (S) geschwenkt wird und unterschiedliche Objekte (2) neben dieser Schwenkbewegung in ihrer Gesamtheit gegenüber der Transportbahn (10) auf zueinander unterschiedlichen Transportpfaden gegenüber der Transportbahn (10) verschoben werden, **dadurch gekennzeichnet, dass** die Objekte mit einer Vielzahl von Verschiebeeinrichtungen (4) verschoben werden, die wenigstens ein Verschiebeelement (6) aufweisen, das in zwei zueinander senkrecht stehenden Richtungen offen ist und die Schwenkbewegung des Verschiebeelements (6) um die vorgegebene Schwenkachse (S) und die Bewegung des Verschiebeelements (6) in seiner Gesamtheit unabhängig voneinander durchgeführt werden.

## Claims

1. A device (1) for displacing objects (2) relative to a transport track (10) along which the objects (2) are moved, with a plurality of displacement means (4), which displace at least some of the objects (2) relative to this transport track (10), wherein the displacement means (4) have at least one displacement element (6), which in at least one region can be brought in contact with the objects (2) in order to displace these relative to the transport track (10), wherein the displacement elements (6) are pivotable about predefined pivot axes (S) and movement means (8), which are respectively assigned to the displacement elements (6) are provided which ensure that different objects (2) can be displaced in their entirety relative to the transport track (10) onto transport paths which are different to one another relative to the transport track (10),
**characterized in that,**
the displacement element (6) is open in two directions, which are perpendicular to one another and the wherein pivot movement of the displacement element (6) about the predefined pivot axis (S) and the movement of the displacement elements (6) in their entirety can be carried out independently from one another.

2. The device according to claim 1,
**characterized in that,**
the displacement element (6) is an angled element (6).

3. The device according to at least any of the preceding claims,
**characterized in that,**
the angled element has a first leg (6a) and a second leg (6b), which intersect along a predefined line (L) and the pivot axis (S) is arranged at a distance from the predefined line (L) and between the both legs (6a, 6b).

4. The device according to claim 3,
**characterized in that,**
the legs (6a) and (6b) are substantially perpendicular to one another.

5. The device according to at least any of the preceding claims 3 - 4,
**characterized in that,**
the pivot axis (S) and the predefined line (L) are substantially parallel to one another.

6. The device according to at least any of the preceding claims,
**characterized in that,**
the movement means are cantilevers (8).

7. The device according to claim 6,
**characterized in that,**
the displacement elements (6) are moveable in the longitudinal directions of the cantilevers (8).

8. The device according to at least any of the preceding claims,
**characterized in that,**
the movement means (8) are rotatable about a central pivot axis (D).

9. A System (12) for transporting objects with a transport belt (14), which transports objects (2), which are arranged on the transport belt (14), with a plurality of displacement means (4) which displace at least some of the objects (2) relative to a transport track (10), wherein the displacement means (4) have at least one displacement element (6), which in at least one region can be brought in contact with the objects (2) in order to displace these relative to the transport track (10), wherein the displacement elements (6) are pivotable about a predefined pivot axis (S) and movement means (8) which are respectively assigned to the displacement elements (6) are provided which ensure that different displacement elements (6) in their entirety can be displaced relative to the transport track (10) onto transport paths which are different to one another.
**characterized in that,**
the displacement element (6) is open in two directions which are perpendicular to one another and the pivot movement of the displacement element (6) about the predefined pivot axis (S) and the movement of the displacement elements (6) in their entirety can be carried out independently from one another.

10. System according to claim 9,
**characterized in that,**
the displacement elements (6), at least temporarily move faster in the transport direction (R) as the transport belt (14).

11. A method for displacing objects (2) relative to a transport track (10) along which the objects (2) are moved, wherein the objects are displaced relative to this transport track (10) by a plurality of displacement means (6), wherein at least one part of the objects (2) is pivoted about a predefined pivot axis (S) which is substantially perpendicular to the transport track (10), and different objects (2) in addition to this pivot movement are displaced in their entirety relative to the transport track (10) onto transport paths which are different to one another relative to the transport track (10),
**characterized in that,**
the objects are displaced with a plurality of displacement means (4), which have at least one displacement element (6), which is open in two directions, which are perpendicular to one another and wherein the pivot movement of the displacement element (6) about the predefined pivot axis (S) and the movement of the displacement element (6) in their entirety can be carried out independently from one another.

## Revendications

1. Installation (1) pour le décalage d'objets (2) par rapport à une voie de transport (10) le long de laquelle les objets (2) sont transportés, avec une pluralité de dispositifs de décalage (4) qui déplacent les objets (2) au moins en partie par rapport à ladite voie de transport (10), les dispositifs de décalage (4) comportant au moins un élément de décalage (6) qui peut être amené au contact des objets (2) dans au moins une zone, pour déplacer ceux-ci par rapport à la voie de transport (10), les éléments de décalage (6) pouvant pivoter autour d'axes de pivotement (S) définis et des dispositifs de déplacement (8) respectivement affectés aux éléments de décalage (6) étant prévus, lesquels permettent de déplacer en totalité différents objets (2) par rapport à la voie de transport (10) sur des trajets de transport différenciés entre eux par rapport à la voie de transport (10),
**caractérisée**
**en ce que** l'élément de décalage (6) est ouvert dans deux directions perpendiculaires l'une à l'autre, et en ce que le pivotement de l'élément de décalage (6) autour de l'axe de pivotement (S) défini et le déplacement de l'élément de décalage (6) dans son ensemble sont réalisables indépendamment l'un de l'autre.

2. Installation selon la revendication 1, **caractérisée en ce que** l'élément de décalage (6) est un élément en équerre (6).

3. Installation selon au moins une des revendications précédentes, **caractérisée en ce que** l'élément en équerre comporte une première aile (6a) et une deuxième aile (6b) qui se rejoignent le long d'une ligne (L) définie, et **en ce que** l'axe de pivotement (S) est distant de la ligne (L) définie et se trouve entre les deux ailes (6a, 6b).

4. Installation selon la revendication 3, **caractérisée en ce que** les ailes (6a) et (6b) sont sensiblement perpendiculaires l'une par rapport à l'autre.

5. Installation selon au moins une des revendications 3 et 4, **caractérisée en ce que** l'axe de pivotement (S) et la ligne (L) définie sont sensiblement parallèles l'un par rapport à l'autre.

6. Installation selon au moins une des revendications précédentes, **caractérisée en ce que** les dispositifs de déplacement sont des flèches (8).

7. Installation selon la revendication 6, **caractérisée en ce que** les éléments de décalage (6) sont déplaçables suivant la direction longitudinale des flèches (8).

8. Installation selon au moins une des revendications précédentes, **caractérisée en ce que** les dispositifs de déplacement (8) sont rotatifs autour d'un axe de rotation (D) central.

9. Système (12) pour le transport d'objets par bande transporteuse (14), convoyant des objets (2) disposés sur la bande transporteuse (14), avec une pluralité de dispositifs de décalage (4) qui déplacent les objets (2) au moins en partie par rapport à une voie de transport (10), les dispositifs de décalage (4) comportant au moins un élément de décalage (6) qui peut être amené au contact des objets (2) dans au moins une zone, pour déplacer ceux-ci par rapport à la voie de transport (10), les éléments de décalage (6) pouvant pivoter autour d'un axe de pivotement (S) défini et des dispositifs de déplacement (8) respectivement affectés aux éléments de décalage (6) étant prévus, lesquels permettent de déplacer en totalité différents éléments de décalage (6) par rapport à la voie de transport (10) sur des trajets de transport différenciés entre eux, **caractérisé en ce que** l'élément de décalage (6) est ouvert dans deux directions perpendiculaires l'une par rapport à l'autre, et **en ce que** le pivotement de l'élément de décalage (6) autour de l'axe de pivotement (S) défini et le déplacement de l'élément de décalage (6) dans son ensemble sont réalisables indépendamment l'un de l'autre.

10. Système selon la revendication 9, **caractérisé en ce que** les éléments de décalage (6) se déplacent suivant la direction de transport (R) au moins temporairement plus vite que la bande transporteuse (14).

11. Procédé pour le décalage d'objets (2) par rapport à une voie de transport (10) le long de laquelle les objets (2) sont transportés, les objets étant déplacés par une pluralité de dispositifs de décalage (6) par rapport à ladite voie de transport (10), au moins une partie des objets (2) étant pivotés autour d'un axe de pivotement (S) défini sensiblement perpendiculaire à la voie de transport (10), et différents objets (2) étant, en plus de ce pivotement, déplacés dans leur totalité par rapport à la voie de transport (10) sur des trajets de transport différenciés entre eux par rapport à la voie de transport (10), **caractérisé en ce que** les objets sont déplacés par une pluralité de dispositifs de décalage (4) comportant au moins un élément de décalage (6) ouvert dans deux directions perpendiculaires l'une par rapport à l'autre, et **en ce que** le pivotement de l'élément de décalage (6) autour de l'axe de pivotement (S) défini et le déplacement de l'élément de décalage (6) dans son ensemble sont exécutables indépendamment l'un de l'autre.
